# EUROPÄISCHE PATENTANMELDUNG

(11) **EP 0 780 930 A2**
(43) Veröffentlichungstag der Anmeldung: **25.06.1997**
(21) Anmeldenummer: 96118419.9
(22) Anmeldetag: 16.11.1996
(51) Int. Cl.: H01R 19/42

(54) **Elektrisches Installationsgerät mit Zentralabdeckung**

(30) Priorität: 22.12.1995 DE 29520459 U
(71) Anmelder: GIRA GIERSIEPEN GmbH. & CO. KG., D-42477 Radevormwald (DE)
(72) Erfinder: Panknin, Jürgen, 42477 Radevormwald (DE); Isermann, Jörg, 42477 Radevormwald (DE); Jasper, Jürgen, 42477 Radevormwald (DE); Walter, Bernhard, 58553 Halver (DE); Fischer, Stefan, 42929 Wermelskirchen (DE); Kirschey, Frank, 42477 Radevormwald (DE)
(74) Vertreter: Zapf, Christoph, Dipl.-Ing.

(57) **Zusammenfassung**

Die vorliegende Erfindung betrifft ein elektrisches Installationsgerät, insbesondere Steckdose, bestehend aus einem Gerätesockel (2) mit elektrischen Kontaktelementen und aus einer lösbar mit dem Gerätesockel (2) verbundenen, insbesondere als Steckdosentopf ausgebildeten Zentralabdeckung (4). Die Zentralabdeckung (4) ist über mindestens ein Befestigungselement (10) derart kraft- und/oder formschlüssig mit dem Gerätesockel (2) verbunden, daß ein schraubfunktionsfreies Befestigen der Zentralabdeckung (4) am Gerätesockel (2) gewährleistet ist.

## Beschreibung

Die vorliegende Erfindung betrifft ein elektrisches Installationsgerät, insbesondere Steckdose, bestehend aus einem Gerätesockel mit elektrischen Kontaktelementen und aus einer lösbar mit dem Gerätesockel verbundenen, insbesondere als Steckdosentopf ausgebildeten Zentralabdeckung.

Es ist bekannt, vor allem bei Steckdosen den die Kontaktelemente zum Schutz vor direkten Berührungen abdeckenden Zentraleinsatz mit dem Gerätesockel zu verschrauben. Hierdurch wird eine relativ hohe Sicherheit gewährleistet, da ein Lösen der Abdeckung stets nur mittels eines geeigneten Werkzeuges (Schraubendrehers) möglich ist. Allerdings muß hierbei auch die Montage stets mittels des Werkzeuges durch Verschrauben erfolgen, was zeitaufwendig und z.T. auch schwierig und umständlich ist.

Der Erfindung liegt die Aufgabe zugrunde, ein Installationsgerät der gattungsgemäßen Art zu schaffen, welches bei konstruktiv einfachem und preiswertem Aufbau eine wesentlich vereinfachte und schnellere Montage der Zentralabdeckung bei zumindest im wesentlichen unveränderter Sicherheit gegen direkte Berühungen der spannungsführenden Kontaktelemente ermöglicht.

Erfindungsgemäß wird dies dadurch erreicht, daß die Zentralabdeckung über mindestens ein Befestigungselement derart kraft- und/oder formschlüssig mit dem Gerätesockel verbunden ist, daß eine schraubfunktionsfreie Montagebefestigung der Zentralabdeckung am Gerätesockel gewährleistet ist. Dies bedeutet, daß es sich um eine neuartige "Schnellbefestigung" der Zentralabdeckung handelt, da das jeweilige Befestigungselement nur noch axial eingesteckt - und gegebenenfalls zusätzlich über einen reduzierten Drehwinkel von ≤ 180°, insbesondere etwa 90°, verdreht zu werden braucht, um die kraft- und/oder formschlüssige Verbindung zu erreichen. Dies ist im Vergleich zu Schraubverbindungen und die dabei notwendige größere Anzahl von Umdrehungen der Schraube ein ganz wesentlicher Montagevorteil, der sich insbesondere bei der Erst- oder Umrüstungsinstallation von Gebäuden durch eine entscheidende Zeitersparnis bemerkbar macht. Dennoch kann vorteilhafterweise eine hohe Sicherheit erreicht werden, indem das Befestigungselement zum Lösen der Zentralabdeckung nach wie vor nur mit einem geeigneten Werkzeug, insbesondere einem Schraubendreher, betätigt werden kann. Durch eine vorteilhafte Ausgestaltung des Befestigungselementes und/oder von mit diesem zusammenwirkenden, sockelseitigen Haltemitteln kann sogar erreicht werden, daß die Montage durch einfaches axiales Einstecken des stiftförmigen Befestigungselementes erfolgen kann, während aber zur Demontage eine "normale" Herausschraubfunktion gewährleistet ist.

Vorteilhafte Ausgestaltungsmerkmale der Erfindung sind in den Unteransprüchen und der anschließenden Figurenbeschreibung enthalten.

Anhand von mehreren, in der Zeichnung veranschaulichten, bevorzugten Ausführungsbeispielen soll nun die Erfindung näher erläutert werden. Es zeigen:
- Fig. 1: einen Längsschnitt durch ein erfindungsgemäßes Installationsgerät in einer ersten vorteilhaften Ausführungsform,
- Fig. 2: eine Einzelheit der Ausführung in Fig. 1 in einer vergrößerten Darstellung,
- Fig. 3: einen Schnitt in einer zur Darstellung in Fig. 2 senkrechten Schnittebene III-III,
- Fig. 4: eine Detail-Perspektivdarstellung zur Erläuterung einer Ausführungsvariante der Verbindungsmittel,
- Fig. 5: einen Schnitt in der Ebene V-V gemäß Fig. 4,
- Fig. 6: einen Schnitt analog zu Fig. 5, jedoch in einer weiteren Ausführungsvariante,
- Fig. 7: einen Längsschnitt analog zu Fig. 1 in einer weiteren vorteilhaften Ausführungsform des erfindungsgemäßen Installationsgerätes,
- Fig. 8: einen Teilschnitt in der Ebene VIII-VIII gemäß Fig. 7 in einer ersten Stellung des Befestigungselementes,
- Fig. 9: eine Darstellung analog zu Fig. 8 in der zweiten Stellung des Befestigungselementes,
- Fig. 10: eine Perspektiv-Detaildarstellung von Einzelteilen der Ausführung nach Fig. 7,
- Fig. 11: eine Darstellung analog zu Fig. 10 in einer Ausführungsvariante und
- Fig. 12: einen Querschnitt in der Ebene XII-XII gemäß Fig. 11.

In den verschiedenen Figuren der Zeichnung sind gleiche bzw. gleichwirkende Teile und Komponenten stets mit den gleichen Bezugszeichen versehen. Daher gilt jede eventuell nur einmal vorkommende Beschreibung eines Teils analog auch bezüglich der anderen Zeichnungsfiguren, in denen dieses Teil ebenfalls zu erkennen ist.

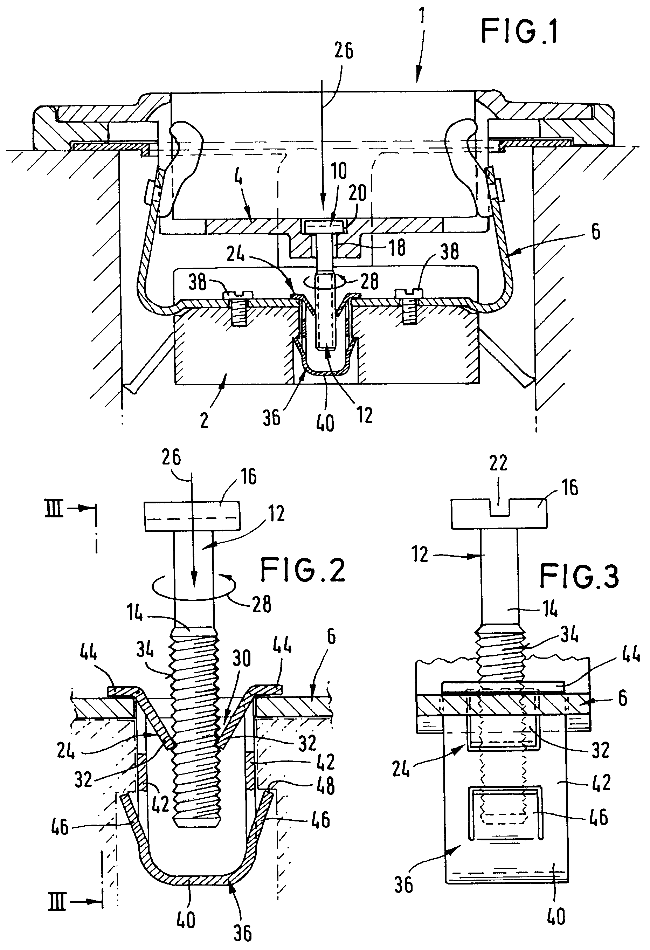

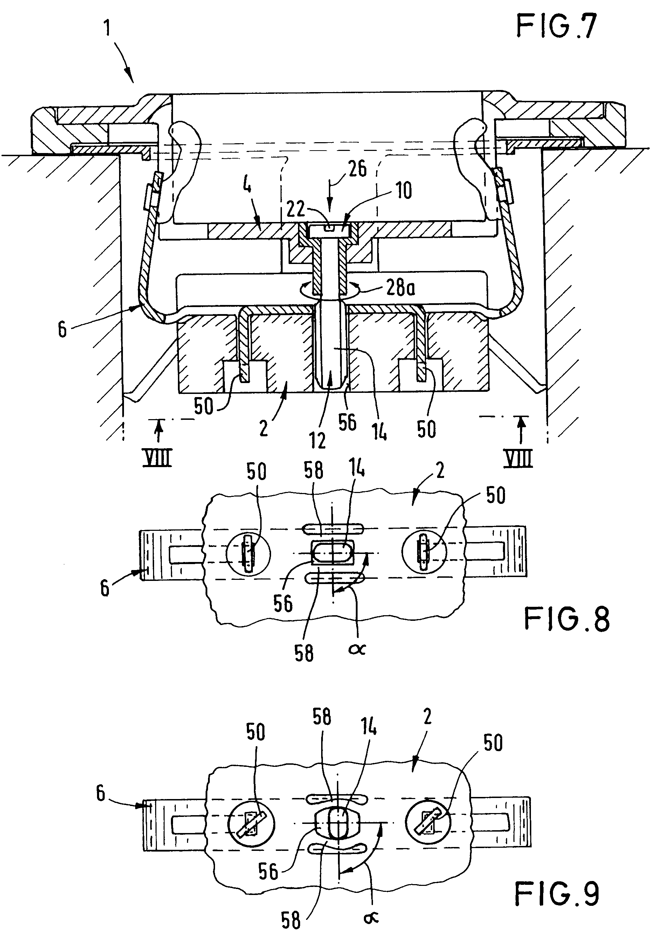

Wie sich aus Fig. 1 und 7 jeweils ergibt, besteht ein erfindungsgemäßes Installationsgerät 1 aus einem Gerätesockel 2 und einer lösbar mit diesem verbundenen Zentralabdeckung 4. Bevorzugt handelt es sich um eine Steckdose, wobei der Gerätesockel 2 die hierfür üblichen elektrischen Kontaktelemente aufweist, von denen in der Zeichnung jedoch nur ein sogenannter Schuko-Bügel 6 (Schutzkontakt-Bügel) erkennbar ist. Die Zentralabdeckung 4 ist hierbei als Steckdosentopf (sog. Schuko-Topf) ausgebildet. In Fig. 1 und 7 ist eine Ausführung als Unterputz-Gerät dargestellt, die Erfindung eignet sich jedoch durchaus auch für Aufputz-Geräte.

Erfindungsgemäß ist die Zentralabdeckung 4 über mindestens ein Befestigungselement 10 derart kraft- und/oder formschlüssig mit dem Gerätesockel 2 verbunden, daß eine schraubfunktionsfreie Montagebefestigung der Zentralabdeckung 4 am Gerätesockel 2 gewährleistet ist. In den dargestellten Ausführungsbeispielen ist als Befestigungselement 10 jeweils ein einzelner, zentrisch angeordneter Haltestift 12 vorgesehen. Dieser Haltestift 12 besitzt einen Schaft 14 und einen Kopf 16, wobei der Schaft 14 eine Montageöffnung 18 der Zentralabdeckung 4 durchgreift. Der Kopf 16 ist bevorzugt in einer Vertiefung 20 der Zentralabdeckung 4 versenkt angeordnet. Zudem weist der Kopf 16 des Haltestiftes 12 eine insbesondere querschlitzförmige Ausnehmung 22 zum Ansetzen eines Betätigungswerkzeuges, insbesondere eines Schraubendrehers, auf.

In den Ausführungen nach Fig. 1 bis 6 wirkt der Haltestift 12 mit seinem Schaft 14 derart mit sockelseitigen Haltemitteln 24 kraft- und/oder formschlüssig zusammen, daß die Montagebefestigung allein durch axiales, schraub- bzw. rotationsfreies Einstecken des Schaftes 14 des Haltestiftes 12 in die sockelseitigen Haltemittel 24 durchführbar ist. Dabei ist vorteilhafterweise aber zum Lösen eine Herausschraubfunktion gewährleistet, so daß ein Lösen in der herkömmlichen Art und Weise erfolgen kann. Die Montage durch axiales Einstecken des Haltestiftes 12 ist in den Fig. 1, 2, und 4 jeweils durch einen Pfeil 26 veranschaulicht, während ein Pfeil 28 die Rotationsrichtung zum Lösen zeigt.

Die sockelseitigen Haltemittel 24 bestehen im wesentlichen aus mindestens zwei diametral gegenüberliegenden, eine Einstecköffnung 30 für den Schaft 14 des Haltestiftes 12 bildenden, schräg in Einsteckrichtung (Pfeil 26) und nach innen in die Einstecköffnung 30 ragenden, elastischen, "widerhakenartigen" Federzungen 32. Diese Federzungen 32 sind derart ausgerichtet, daß der Haltestift 12 mit seinem Schaft 14 zwischen die sich hierzu elastisch verformenden Federzungen 32 einsteckbar und von diesen dann kraft- und/oder formschlüssig in Herausziehrichtung gehalten ist.

In der dargestellten, bevorzugten Ausführungsform nach den Fig. 1 bis 6 weist der Haltestift 12 an seinem Schaft 14 ein Außengewinde 34 auf, wobei die Federzungen 32 mit an ihren freien Enden gebildeten Haltekanten in die Gewindegänge des Außengewindes 34 eingreifen (siehe hierzu insbesondere Fig. 1 und 2). Hierdurch wird die Einsteck- und Herausschraubfunktion erreicht, denn die Federzungen 32 bilden mit ihren Haltekanten praktisch ein Gewinde bzw. einen Gewindegang, mit dem das Außengewinde 34 des Haltestiftes 12 zusammenwirkt. Das Einstecken ist nach Art einer Rastverbindung (schnappbare Formschlußverbindung) durch elastische Verformung der Federzungen 32 möglich.

Alternativ zu dieser dargestellten Ausführung kann der Schaft 14 des Haltestiftes 12 auch eine im wesentlichen zylindrische, "glatte" Umfangsfläche aufweisen, wobei in diesem Fall die Federzungen 32 an ihren freien Enden zur Bildung von gewindegangartigen Haltekanten scharfkantig ausgebildet sind. Diese scharfen, gewindegangartigen Haltekanten schneiden sich dann etwas in den zylindrischen Schaft ein, so daß bei Rotation praktisch selbsttätig ein Gewinde geformt und hierdurch der Haltestift 12 herausgeschraubt wird.

In beiden Fällen sind vorzugsweise die an den freien Enden der Federzungen 32 gebildeten Haltekanten in Anpassung an die äußere Umfangsfläche des Schaftes 14 kreisbogenförmig ausgebildet.

In der Ausführungsform nach Fig. 1 bis 3 sind die Federzungen 32 der sockelseitigen Haltemittel 24 Bestandteil eines sockelseitig gegen Verdrehen gesichert gehalterten Befestigungselementes 36. Hierbei ist es besonders vorteilhaft, wenn dieses Befestigungselement 36 zusätzlich auch zur Halterung insbesondere des Schuko-Bügels 6 dient. In diesem Fall können die in Fig. 1 zusätzlich eingezeichneten Befestigungsschrauben 36 entfallen. Das Befestigungselement 36 ist bevorzugt als im wesentlichen U-förmige Halteklammer 40 aus Federstahiblech gebildet. Diese Halteklammer 40 weist zwei etwa parallele U-Schenkel 42 auf, an deren freien Enden jeweils nach außen abgewinkelte Haltestege 44 gebildet sind. Aus den U-Schenkeln 42 sind die Federzungen 32 freigeschnitten und schräg nach innen abgewinkelt. Im sich in Einsteckrichtung (Pfeil 26) des Haltestiftes 12 an die Federzungen 32 anschließenden Bereich sind weitere freigeschnittene und schräg nach außen abgewinkelte, der Einsteckrichtung entgegengerichtete Haltezungen 46 angeordnet. Zum Befestigen des Schuko-Bügels 6 am Gehäusesockel 2 wird die Halteklammer 40 in entsprechende Öffnungen dieser beiden Teile eingesteckt, bis die Haltezungen 46 nach elastischer Verformung nach außen zurückfedern und dabei jeweils eine Haltekante 48 hintergreifen. Hierdurch sind Abschnitte des Gerätesockels 2 und des Schuko-Bügels 6 zwischen den Haltestegen 44 einerseits und den freien Enden der Haltezungen 46 andererseits relativ zueinander fixiert angeordnet. Dies ist vor allem in Fig. 2 zu erkennen. Bei dieser Ausführung des Befestigungselementes 36 handelt es sich somit vorteilhafterweise um ein "Multifunktionselement".

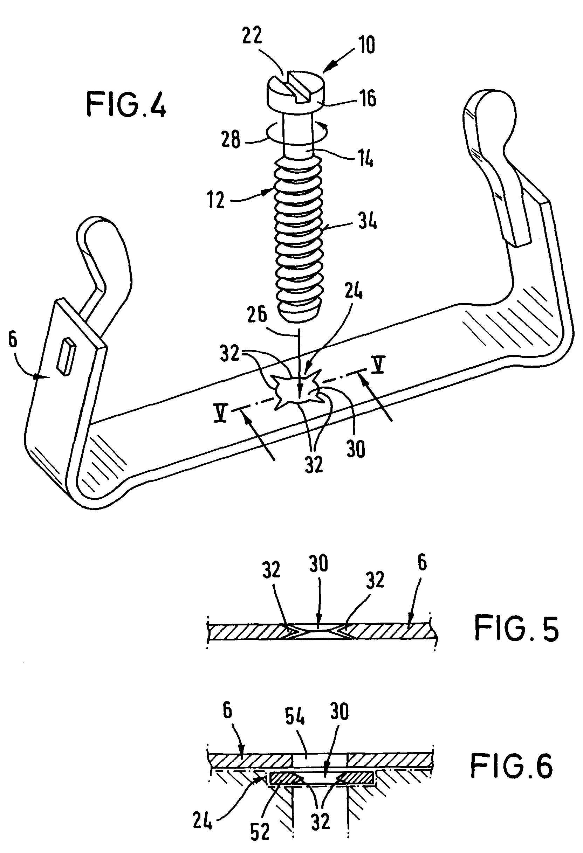

Gemäß Fig. 4 und 5 können die Federzungen 32 der sockelseitigen Haltemittel 24 mit Vorteil auch Bestandteil des Schuko-Bügels 6 oder eines anderen Funktionselementes des Gerätesockels 2 sein. Bei der bevorzugten, dargestellten Ausführungsform weist hierzu der Schuko-Bügel 6 die Einstecköffnung 30 auf, wobei hier vorzugsweise vier umfänglich verteilte Federzungen 32 vorgesehen sind. Zudem muß in diesem Fall der Schuko-Bügel 6 über separate, eigene Befestigungsmittel am Gerätesockel 2 befestigt sein. Diese separate Befestigung kann beispielsweise mittels der in Fig. 1 eingezeichneten Befestigungsschrauben 38 erfolgen. Eine alternative Lösung ist in den Fig. 7 bis 10 veranschaulicht. Hierbei weist der Schuko-Bügel 6 freigeschnittene und abgewinkelte Haltelaschen 50 auf, die durch Öffnungen des Gerätesockels 2 geführt und endseitig so verformt, insbesondere verdreht (verschränkt) sind, daß hierdurch eine formschlüssige Verbindung erreicht wird (s. insbesondere Fig. 9).

In Fig. 6 ist noch eine weitere Alternative veranschaulicht. Hierbei sind die Federzungen 32 Bestandteil eines sockelseitig fixiert gelagerten Federelementes 52, bei dem es sich insbesondere um einen Federring nach Art einer Wellensicherung handelt. Das Federelement 52 ist bevorzugt in einer Aufnahmevertiefung des Gerätesockels 2 "unterhalb" des Schuko-Bügels 6 gelagert.Der Schuko-Bügel 6 weist hierbei eine Durchführöffnung 54 für den Schaft 14 des Haltestiftes 12 auf.

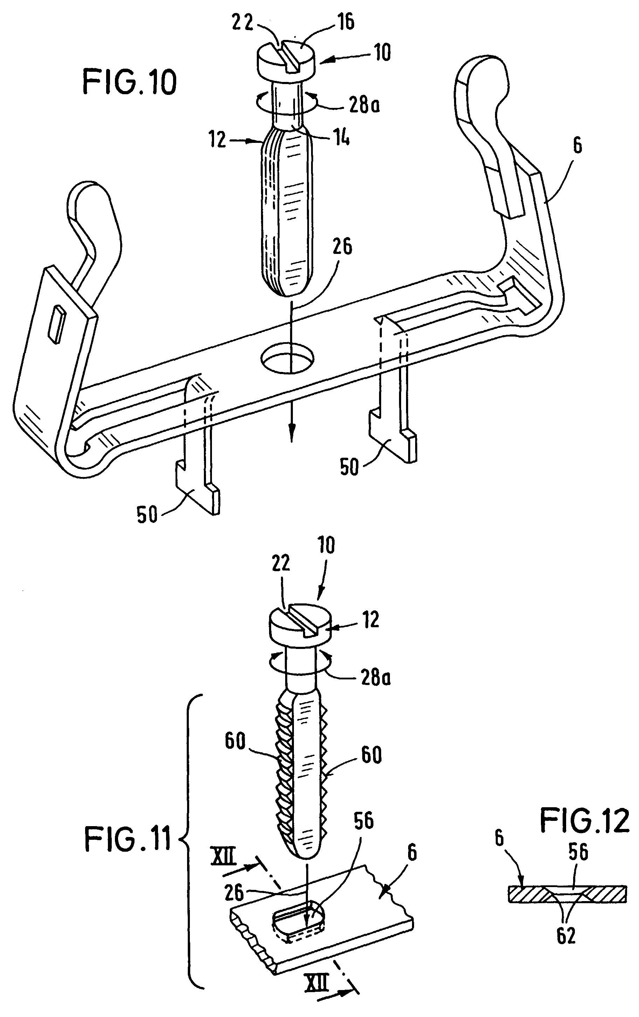

In der Ausführungsform nach Fig. 7 bis 10 greift der Haltestift 12 mit seinem Schaft 14 in eine sockelseitige Halteöffnung 56 ein, wobei der Schaft 14 und die Halteöffnung 56 jeweils einen derart aneinander angepaßten, von der Kreisform abweichenden Querschnitt aufweisen, daß der Schaft 14 in einer ersten Drehstellung (Montage- bzw. Lösestellung; s. insbesondere Fig. 8) des Haltestiftes 12 im wesentlichen reibungsfrei in axialer Richtung in die Halteöffnung 56 einsteckbar bzw. aus dieser entnehmbar ist und in einer zweiten Drehstellung (Arretierstellung; Fig.9) der Haltestift 12 kraft- und/oder formschlüssig in der Halteöffnung 56 gehalten wird. Gemäß Fig. 8 weist die Halteöffnung 56 bevorzugt einen länglichen rechteckigen Querschnitt auf, und der Schaft 14 besitzt einen etwa ovalen Querschnitt. Dabei ist die Halteöffnung 56 im Bereich der Längsseiten ihres Öffnungsquerschnittes derart von elastisch verformbaren Wandungen 58 begrenzt, daß der Schaft 14 des Haltestiftes 12 in der Arretierstellung (Fig.9) durch elastische Verformung der Wandungen 58 hauptsächlich kraftschlüssig (klemmend) fixiert ist. Gemäß Fig. 10 besitzt der Schaft 14 eine im wesentlichen glatte Oberfläche. In diesem Fall weist die Halteöffnung 56 zweckmäßigerweise eine große, dem Schaft 14 etwa entsprechende Länge auf, um einen maximal möglichen Kraftschluß zu erreichen.

Gemäß Fig. 7 ist der Haltestift 12 im Bereich der Montageöffnung 18 der Zentralabdeckung 4 derart in einer Einsatzbuchse gelagert, daß er in axialer Richtung im wesentlichen unbeweglich in der Zentralabdeckung 4 sitzt, dabei aber zwischen den beiden Stellungen nach Fig. 8 und 9 frei drehbar ist. Der Drehwinkelbereich α beträgt bevorzugt etwa 90° zwischen den beiden Stellungen nach Fig. 8 und 9.

In einer in den Fig. 11 und 12 veranschaulichten Ausführungsvariante ist der Schaft 14 des Haltestiftes 12 derart oberflächenstrukturiert, daß im Zusammenwirken mit der Halteöffnung 56 in der zweiten Drehstellung (Arretierstellung) des Haltestiftes 12 ein Form- oder Kraftformschluß erreicht wird. Die Oberflächenstrukturierung besteht bevorzugt aus Außengewindeabschnitten 60, wobei vorzugsweise im Öffnungsrandbereich der Halteöffnung 56 gemäß Fig. 12 Haltekanten 62 gebildet sind, die in Gewinderillen der Gewindeabschnitte 60 eingreifen. Hierdurch wird eine Art Bajonettverbindung erzeugt, indem der Haltestift 12 zunächst axial in Pfeilrichtung 26 eingesetzt und dann in Doppelpfeilrichtung 28a um 90° verdreht wird.

Für die Ausführungsformen nach Fig. 7 bis 12 ist die oben bereits beschriebene, querschlittsförmige Ausnehmung 22 von besonderem Vorteil, da hierdurch aufgrund der jeweiligen Anordnung bzw. Ausrichtung des Schlitzes auch die jeweilige Stellung des Haltestiftes 12 von außen erkennbar ist.

Bei allen bisher beschriebenen Ausführungsformen der Erfindung ist als zusätzlicher Vorteil hervorzuheben, daß durch die erfindungsgemäße Art der Befestigung der Zentralabdeckung 4 am Gerätesockel 2 auch ein Höhenausgleich möglich ist, da der Haltestift 12 in unterschiedlichen Einstecktiefen befestigt werden kann. Dies dient vor allem zum Ausgleich von montageortbedingten Unterschieden in der Einsetztiefe des Installationsgerätes 1 (Tapetenausgleich).

Alternativ zu den dargestellten, bevorzugten Ausführungsbeispielen ist es im Bereich der Erfindung ebenfalls möglich, daß die Zentralabdeckung 4 über eine schnappbare Form- oder Kraftformschlußverbindung (Rastverbindung) am Gerätesockel 2 befestigt ist. Dabei weisen die Zentralabdeckung 4 und/oder der Gerätesockel 2 als Befestigungselement mindestens einen Rastansatz auf, der mit einer entsprechenden Rastöffnung des jeweils anderen Teils zusammenwirkt. Auch hierbei ist folglich eine schraubfunktionsfreie Montage möglich.

Im übrigen ist die Erfindung ohnehin nicht auf die dargestellten und beschriebenen Ausführungsbeispiele beschränkt, sondern umfaßt auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Elektrisches Installationsgerät, insbesondere Steckdose, bestehend aus einem Gerätesockel (2) mit elektrischen Kontaktelementen und aus einer lösbar mit dem Gerätesockel (2) verbundenen, insbesondere als Steckdosentopf ausgebildeten Zentralabdeckung (4),
**dadurch gekennzeichnet,** daß die Zentralabdeckung (4) über mindestens ein Befestigungselement (10) derart kraft- und/oder formschlüssig mit dem Gerätesockel (2) verbunden ist, daß ein schraubfunktionsfreies Befestigen der Zentralabdeckung (4) am Gerätesockel (2) gewährleistet ist.

2. Installationsgerät nach Anspruch 1,
**dadurch gekennzeichnet,** daß die Verbindung der Zentralabdeckung (4) mit dem Gerätesockel (2) derart ausgebildet ist, daß zum Höhen- bzw. Einsetztiefenausgleich die Zentralabdeckung (4) in unterschiedlichen Höhenabständen vom Gerätesockel (2) an diesem befestigbar ist.

3. Installationsgerät nach Anspruch 1 oder 2,
**dadurch gekennzeichnet,** daß das Befestigungselement (10) als ein eine Montageöffnung (18) der Zentralabdeckung (4) durchgreifender, insbesondere zentrisch angeordneter Haltestift (12) ausgebildet ist.

4. Installationsgerät nach Anspruch 3,
**dadurch gekennzeichnet,** daß der Haltestift (12) mit seinem Schaft (14) derart kraft- und/oder formschlüssig mit sockelseitigen Haltemitteln (24) zusammenwirkt, daß die Montagebefestigung durch axiales Einstecken des Schaftes (14) des Haltestiftes (12) in die sockelseitigen Haltemittel (24) durchführbar ist und zum Lösen eine Herausschraubfunktion gewährleistet ist.

5. Installationsgerät nach Anspruch 3 oder 4,
**dadurch gekennzeichnet,** daß die sockelseitigen Haltemittel (24) mindestens zwei eine Einstecköffnung (30) für den Schaft (14) des Haltestiftes (12) bildende, derart schräg in Einsteckrichtung und nach innen in die Einstecköffnung (30) ragende, elastische Federzungen (32) aufweisen, daß der Haltestift (12) mit seinem Schaft (14) zwischen die Federzungen (32) einsteckbar und von diesen kraft- und/oder formschlüssig in Herausziehrichtung gehalten ist.

6. Installationsgerät nach Anspruch 5,
**dadurch gekennzeichnet,** daß der Haltestift (12) an seinem Schaft (14) ein Außengewinde (34) aufweist, wobei die Federzungen (32) in die Gewindegänge des Außengewindes (34) eingreifen.

7. Installationsgerät nach Anspruch 5,
**dadurch gekennzeichnet,** daß der Schaft (14) des Haltestiftes (12) eine zylindrische Umfangsfläche aufweist, wobei die Federzungen (32) an ihren freien Enden scharfe Haltekanten mit einem gewindegangartigen Verlauf aufweisen.

8. Installationsgerät nach einem oder mehreren der Ansprüche 5 bis 7,
**dadurch gekennzeichnet,** daß die Federzungen (32) der sockelseitigen Haltemittel (24) Bestandteil eines sockelseitig gegen Verdrehen gesichert gehalterten Befestigungselementes (36) sind, welches vorzugsweise zusätzlich zur Halterung mindestens eines weiteren Bauteils, insbesondere eines Schuko-Bügels (6), dient.

9. Installationsgerät nach Anspruch 8,
**dadurch gekennzeichnet,** daß das Befestigungselement (36) als im wesentlichen U-förmige Halteklammer (40) aus Federstahlblech gebildet ist, deren U-Schenkel (42) an ihren freien Enden nach außen abgewinkelte Haltestege (44) aufweisen, wobei die Federzungen (32) aus den U-Schenkeln (42) freigeschnitten und schräg nach innen abgewinkelt sind, und wobei im sich in Einsteckrichtung des Haltestiftes (12) an die Federzungen (32) anschließenden Bereich freigeschnittene und schräg nach außen abgewinkelte, der Einsteckrichtung entgegengerichtete Haltezungen (46) angeordnet sind, wobei Abschnitte des Gerätesockels (2) und des zu halternden weiteren Bauteils, insbesondere des Schuko-Bügels (6), zwischen den Haltestegen (44) und den freien Enden der Haltezungen (46) relativ zueinander fixiert angeordnet sind.

10. Installationsgerät nach einem oder mehreren der Ansprüche 5 bis 7,
**dadurch gekennzeichnet,** daß die Federzungen (32) der sockelseitigen Haltemittel (24) Bestandteil eines sockelseitig fixiert gelagerten Federelementes (52) sind.

11. Installationsgerät nach einem oder mehreren der Ansprüche 5 bis 7,
**dadurch gekennzeichnet,** daß die Federzungen (32) der sockelseitigen Haltemittel (24) Bestandteil eines Funktionselementes des Gerätesockels (2), insbesondere eines am Gerätesockel (6) befestigten Schuko-Bügels (6), sind.

12. Installationsgerät nach Anspruch 3,
**dadurch gekennzeichnet,** daß der Haltestift (12) mit seinem Schaft (14) in eine sockelseitige Halteöffnung (56) eingreift, wobei der Schaft (14) und die Halteöffnung (56) jeweils einen derart aneinander angepaßten, von der Kreisform abweichenden Querschnitt aufweisen, daß der Schaft (14) in einer ersten Drehstellung (Fig.8) des Haltestiftes (12) ungehindert in die Halteöffnung (56) einsteckbar bzw. aus dieser entnehmbar ist und in einer zweiten Drehstellung (Fig.9) der Haltestift (12) kraft- und/oder formschlüssig in der Halteöffnung (56) gehalten ist.

13. Installationsgerät nach Anspruch 12,
**dadurch gekennzeichnet,** daß die Halteöffnung (56) derart von elastisch verformbaren Wandungen (58) begrenzt wird, daß der Schaft (14) des Haltestiftes (12) in der zweiten Drehstellung (Fig. 9) kraftschlüssig in der Halteöffnung (56) fixiert ist.

14. Installationsgerät nach Anspruch 12 oder 13,
**dadurch gekennzeichnet,** daß der Schaft (14) des Haltestiftes (12) derart oberflächenstrukturiert ist, daß im Zusammenwirken mit der Halteöffnung (56) in der zweiten Drehstellung des Haltestiftes (12) ein Form- oder Kraftformschluß erreicht wird.

15. Installationsgerät nach einem oder mehreren der Ansprüche 3 bis 14,
**dadurch gekennzeichnet,** daß der Haltestift (12) einen Kopf (16) aufweist, der vorzugsweise in einer Vertiefung (20) der Zentralabdeckung (4) versenkt angeordnet ist.

16. Installationsgerät nach Anspruch 15,
**dadurch gekennzeichnet,** daß der Kopf (16) des Haltestiftes (12) eine insbesondere querschlitzförmige Ausnehmung (22) für ein Betätigungswerkzeug aufweist.

17. Installationsgerät nach Anspruch 1 oder 2,
**dadurch gekennzeichnet,** daß die Zentralabdeckung (4) über eine schnappbare Form- oder Kraftformschlußverbindung am Gerätesockel (2) befestigt ist.
